# EUROPEAN PATENT APPLICATION

(11) **EP 4 837 467 A1**
(43) Date of publication of application: **11.11.2026**
(21) Application number: 25174638.4
(22) Date of filing: 06.05.2025
(51) Int. Cl.: A47J 31/44

(54) **MILK DISPENSING UNIT FOR A COFFEE MACHINE**

(71) Applicant: BSH Hausgeräte GmbH, 81739 München (DE)
(72) Inventor: Schnellinger, Christian, 83379 Wonneberg (DE); Henz, Manuel, 83410 Laufen (DE); Sollmann, Martin, 83278 Traunstein (DE); Watzl, Michael, 83329 Waging a. See (DE)

(57) **Abstract**

A milk dispensing unit (10) for a coffee machine comprising: a milk container (20) and a milk line (30), wherein the milk dispensing unit (10) is detachably connected to a coffee machine, wherein the milk line (30) consists of two detachably connected parts: a first part (31) and a second part (32), which in an assembled state form a milk flow channel (35). The present invention provides a milk dispensing unit for a coffee machine in which the components are designed to be easily detachable. This allows for quick and complete manual cleaning when required, without the use of complex tools. The ability to remove components ensures that each part of the milk dispensing system can be properly sanitized, helping to maintain high standards of hygiene.

## Description

The present invention relates to a milk dispensing unit for a coffee machine comprising an external milk container for storing milk and a milk line inserted into the milk container for delivering the milk from the milk container to the coffee machine. The milk dispensing unit is detachably connected to the coffee machine.

In conventional coffee machines used in commercial and high-end domestic environments, milk is an essential ingredient in the preparation of a variety of popular coffee drinks. Typically, milk is steamed or frothed before being dispensed into a cup or mixed with brewed coffee. However, existing milk dispensing units often face problems related to contamination, inefficient milk flow or difficulty in cleaning. Milk, especially when frothed or steamed, is a perishable substance that can easily lead to the growth of bacteria if not properly cleaned. Residual milk left in the milk line after use can lead to unpleasant odors, bacterial contamination and cross-contamination between different types of milk, which can affect the taste and safety of beverages. Typically, milk lines consist of hard-to-reach components that are difficult to clean thoroughly, resulting in milk residue build-up and potential hygiene risks. Standard milk systems currently use a hose system that has a small internal diameter and is therefore difficult to clean by hand or in the dishwasher. It can be cleaned by hand with a mini brush, although the cleaning result is difficult to see visually. In the dishwasher, it can only be placed in a dishwasher basket, as the thin diameter of the pipe does not allow it to be placed on a plate holder, for example. In addition, this thin diameter cannot be rinsed hygienically by the dishwasher if stored appropriately.

The patent document EP 2 695 555 A1 discloses a device which has a milk line that is fluidly connected to a milk froth for drawing a liquid from a reservoir outside of a coffee machine. A cleaning tank is fluidly connected to the milk line and whose inside diameter is only slightly larger than the outer diameter of the milk line. The cleaning tank fluidly connected to the milk line is closed by a reversible shutter. The reversible shutter is comprised of a pair of plug that are arranged corresponding to each other on the cleaning tank and the milk line, respectively.

The patent document EP 2 911 560 A1 discloses a beverage making appliance comprising at least one tube for transporting a liquid, particularly a tube which is provided with a slit extending along a length of the tube between one end of the tube and another end of the tube. At the position of the slit, the tube is openable, which is advantageous for cleaning purposes. Hence, the tube is very well applicable in appliances such as milk frothers in which liquids are used which are apt to cause contamination of a system for transporting those liquids. It is possible to use elastic material in the tube, so that the tube can be folded open for assuming a flat appearance.

It is the object of the present invention to provide a milk dispensing unit for a coffee machine which incorporates advanced features enabling an easy cleaning and maintaining a high level of hygiene throughout the milk delivery process.

The object is solved by a milk dispensing unit for a coffee machine comprising: a milk container and a milk line, wherein the milk dispensing unit is detachably connected to the coffee machine wherein the milk line consists of two detachably connected parts: a first part and a second part, which in an assembled state form a milk flow channel. The first part is an inner part and the second part is an outer part surrounding the first part. The first part and the second part have a tubular shape with tapered walls. The inner part has a groove which, when assembled with the second part, forms a milk flow channel so that the groove itself does not act as a fully enclosed conduit until it is combined with the second part. When the first part and the second part are assembled, the groove of the first part creates a milk flow channel with the second part. The milk flow channel is created only when the first part is properly assembled with the second part, indicating a modular and efficient design. The outer second part acts primarily as a seal and support structure for the groove of the first inner part. The precise fit between the two parts ensures a sealed milk passage, preventing leakage and maintaining proper milk flow dynamics. Preferably, the first part and the second part are made of elastic material e.g. silicone, to facilitate assembly and disassembly of the parts and to improve the tightness of the flow channel ensuring no leakage and the right amount of milk delivery at the right time.

In a preferred embodiment of the invention the first part has a connecting part for connecting the milk dispensing unit to the coffee machine and which is a part of the milk flow channel. The milk dispensing system is designed to facilitate a seamless connection between the milk line and the coffee machine, which is essential for preparing milk-based beverages, such as latte, cappuccino, or other coffee beverages that require frothed or steamed milk. The first part of the milk line includes the connecting part, which serves as the interface for attaching the milk dispensing unit to the coffee machine. The connecting part allows for the proper flow of milk from the milk dispensing unit into the coffee machine's milk foaming system, ensuring that milk is dispensed efficiently and in the correct quantity for beverage preparation. The connecting part is a rigid tubular shaped element, which is advantageous because it ensures a secure and stable connection. Its rigidity reduces the risk of leaks or disconnections that can occur when a part is too flexible. The rigid nature of the connecting part allows it to withstand the pressures involved in frothing and dispensing milk without deforming. The connecting part is located at the upper end of the milk line, acting as an extension of the milk line that carries milk from the milk container to the coffee machine. This part aligns with the slot in the coffee machine to ensure a seamless flow of milk from the milk line to the frothing system. The purpose of this connection is to ensure that the milk is delivered in a controlled manner to the coffee machine's milk foaming system, enabling the preparation of milk beverages. Whether the milk is being frothed for a cappuccino, steamed for a latte, or simply dispensed for a milk coffee, the connecting part plays a critical role in the process, ensuring that the milk arrives at the machine in a timely and efficient manner for high-quality beverage preparation.

In another embodiment of the invention, the first part and the second part are tapered to facilitate their mutual assembly and disassembly. In this embodiment of the invention, the design of the milk line system includes tapered components for improved ease of use during assembly and disassembly. Specifically, the first part and the second part of the system are formed with tapered walls, which means that the walls are slightly inclined rather than being perpendicular to the surface. This subtle taper allows for smoother separation and connection of the two parts. Milk lines in milking systems often require frequent cleaning to maintain hygiene and prevent the build-up of milk residue, bacteria, or other contaminants. While automatic cleaning systems of the automatic coffee machine can be programmed to clean the milk line on a regular basis, there are times when manual cleaning is still required. This may be due to more thorough cleaning requirements, maintenance routines, or troubleshooting situations. In the case of the tapered design, the slight incline of the walls on both parts of the milk line makes it much easier to manually separate the components for cleaning. Because parts are tapered, they can slide apart with less friction, reducing the force required to disconnect them. This design also makes it easier to align and reassemble the parts back together, as the taper helps guide the components into place, minimizing the chance of misalignment or difficulty during reassembly. Overall, the tapered parts are a practical design feature that addresses the need for frequent maintenance and cleaning, streamlining the user experience while improving the efficiency and convenience of milk line maintenance. The slight inclination of the walls significantly reduces the complexity of these operations, saving time and effort for the user while ensuring that the system remains clean and hygienic.

In another embodiment of the invention, the length of the first part is greater than the length of the second part so that in the assembled state the first part protrudes from the second part to facilitate disassembly of the first part from the second part. By making the first part longer than the second part, and allowing it to protrude beyond the second part when the system is assembled, the design makes it easier for the user to separate the components when needed. This protrusion provides an exposed portion of the first part that can be grasped, pulled, or otherwise interacted with to easily separate it from the second part. In practice, this makes it much easier for the user to separate the two components, especially in situations where the parts may be securely locked together during regular use. In many milk line systems, components may need to be disconnected periodically also for cleaning, maintenance, or troubleshooting. Designing these parts so that the first part protrudes beyond the second makes it easier to physically grasp and disconnect them. This ergonomic design of the milk line components directly improves the user experience.

Advantageously, the connection of the milk line to the milk container is secured by a cap. The function of the cap is to securely fasten the milk line to the milk container, preventing any unintended disconnections or leakage. The cap also protects of the milk placed in the milk container from contamination that could cause the malfunction of the frothing process or can influence the quality of the milk beverage. The cap provides also protection against milk spills during connection and disconnection of the milk dispensing unit to the coffee machine which helps maintain the hygiene of the beverage making process.

The present invention provides a milk dispensing unit for a coffee machine in which the components are designed to be easily detachable. This allows for quick and complete manual cleaning when required, without the use of complex tools. The ability to remove components ensures that each part of the milk dispensing system can be properly sanitized, helping to maintain high standards of hygiene.

The construction of the invention, however, together with additional objects and corresponding advantages will be best understood from the following description of specific embodiments and in connection with the accompanying drawing.

In the drawing:
- Fig. 1: shows a cross section of a milk dispensing unit with a milk line consisting of a first part and a second part in assembled state
- Fig. 2: shows an isometric view of the first part of the milk line
- Fig. 3: shows an isometric view of the second part of the milk line with a cap

In cooperation with attached drawing, the technical contents and detailed description of the present invention are described thereinafter according to a preferable embodiment being not used to limit its executing scope. Any equivalent variation and modification made according to appended claims is all covered by the claims claimed by the present invention.

In the following description of the preferred embodiments of the present invention, similar identical reference numbers designate identical of comparable components.

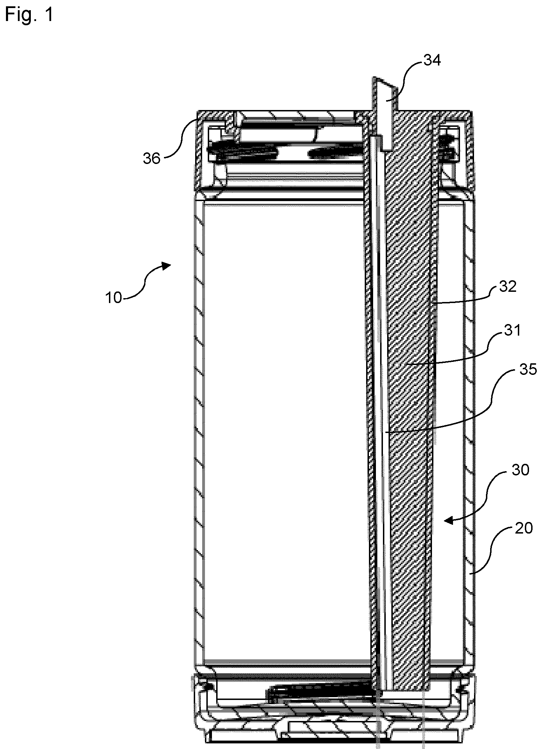

Fig. 1 shows a milk dispensing unit 10 of a coffee machine (not shown on the figure). The milk dispensing unit 10 comprises a milk container 20 and a milk line 30 which is inserted into the milk container 20 in order to deliver milk from the milk container 20 to the coffee machine. The milk container 20 is a simple receptacle for storing milk to be delivered to the coffee machine for preparing a milk beverage. The milk line 30 consists of a first part 31 and a second part 32. The first part 31 is an inner part of the milk line 30. The first part 31 has slightly tapered walls and the first part 31 has a groove 33 which extends along the entire length of the first part 31. The second part 32 is designed in the form of a tube with slightly tapered walls. The second part 32 is an outer part which surrounds the first part 31, which means that the diameter of the first part 31 is smaller than the diameter of the second part 32. The assembled state of the milk line 30 is when the outer second part 32 surrounds the inner first part 31. In this state, the groove 33 of the first part 31 and the wall of the second part 32 form a milk flow channel 35 which extends through the entire length of the milk line through which the milk is delivered from the milk container 20 to the coffee machine. The milk line 30 is fixedly attached to the milk container 20 by a cap 36.

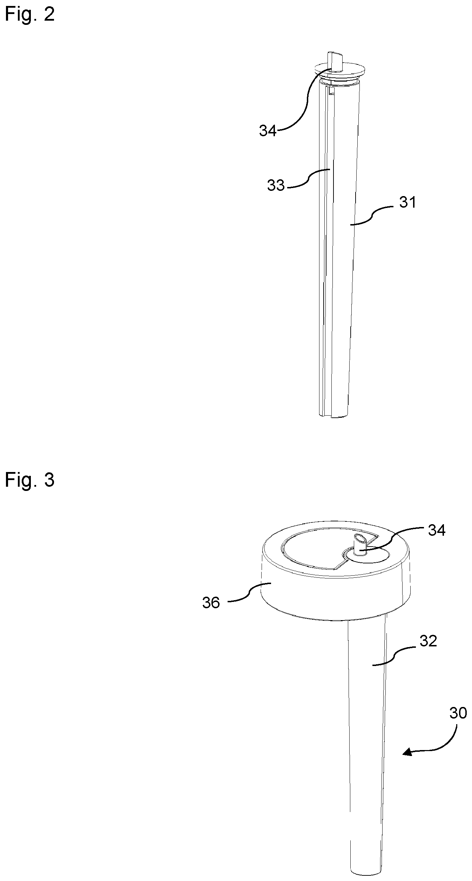

Fig. 2 shows an isometric view of the first part 31 of the milk line 30. The first part 31 has a groove 33 and a connecting part 34. The connecting part 34 is a part of a tubular shape, which during use is inserted into an appropriate slot of the coffee machine (not shown on the figure) to allow the milk to flow from the milk dispensing unit to the coffee machine for the preparation of a milk-based beverage or frothed milk.

Fig. 3 shows an isometric view of the second part 32 of the milk line 30 with a cap 36 and the connecting part 34.

The present invention provides a milk dispensing unit for a coffee machine in which the components are designed to be easily detachable. This allows for quick and complete manual cleaning when required, without the use of complex tools. The ability to remove components ensures that each part of the milk dispensing system can be properly sanitized, helping to maintain high standards of hygiene.

### REFERENCE SIGNS

- 10: milk dispensing unit

- 20: milk container

- 30: milk line
- 31: first part
- 32: second part
- 33: groove
- 34: connecting part
- 35: milk flow channel
- 36: cap

## Claims

1. A milk dispensing unit (10) for a coffee machine comprising: a milk container (20) and a milk line (30), wherein the milk dispensing unit (10) is detachably connected to a coffee machine, **characterized in that** the milk line (30) consists of two detachably connected parts: a first part (31) and a second part (32), which in an assembled state form a milk flow channel (35).

2. The milk dispensing unit (10) according to claim 1, **characterized in that** the first part (31), which is an inner part, has a groove (33) which forms the milk flow channel (35) with the second part (32), which is an outer part.

3. The milk dispensing unit (10) according to any of the preceding claims, **characterized in that** the first part (31) has a connecting part (34) for connection the milk dispensing unit (10) to the coffee machine and which is a part of the milk flow channel (35).

4. The milk dispensing unit (10) according to any of the preceding claims, **characterized in that** the first part (31) and the second part (32) are tapered to facilitate their mutual assembly and disassembly.

5. The milk dispensing unit (10) according to any of the preceding claims, **characterized in that** the first part (31) and the second part (32) are made of elastic material.

6. The milk dispensing unit (10) according to any of the preceding claims, **characterized in that** the length of the first part (31) is greater than the length of the second part (32) so that in the assembled state the first part (31) protrudes from the second part (32) to facilitate disassembly of the first part (31) from the second part (32).

7. The milk dispensing unit (10) according to any of the preceding claims, **characterized in that** the connection of the milk line (30) with the milk container (20) is secured by a cap (36).
